# EUROPEAN PATENT APPLICATION

(11) **EP 2 947 886 A1**
(43) Date of publication of application: **25.11.2015**
(21) Application number: 13871939.8
(22) Date of filing: 08.11.2013
(51) Int. Cl.: H04N 21/231, H04N 21/2343, H04N 21/2662

(54) **CONTENT SERVER AND CONTENT DISTRIBUTION METHOD**

(30) Priority: 18.01.2013 JP 2013007888
(71) Applicant: Sony Corporation, Tokyo 108-0075 (JP)
(72) Inventor: HIRABAYASHI, Mitsuhiro, Tokyo 108-0075 (JP); IGARASHI, Tatsuya, Tokyo 108-0075 (JP); YAMAGISHI, Yasuaki, Tokyo 108-0075 (JP)
(74) Representative: D Young & Co LLP
(86) International application number: PCT/JP2013/080262
(87) International publication number: WO 2014/112186

(57) **Abstract**

There is provided a content server including a storage unit configured to store a first segment index file that stores access information to access each of a plurality of sub-segments constituting each of encoded data obtained by encoding same contents at different bit rates and quality information of each of the plurality of sub-segments, and a communication unit configured to transmit the first segment index file to a client device and transmit a sub-segment of encoded data selected by the client device based on the first segment index file.

## Description

### Technical Field

The present disclosure relates to a content server and a content distribution method.

### Background Art

In recent years, there are widely used the hypertext transfer protocol (HTTP) for transferring contents and the MP4 related to content compression encoding. The HTTP enables not only downloading of contents but also streaming thereof in the Internet. The HTTP streaming is also adopted in network media standards such as "DLNA guidelines" (2006) and "Open IPTV Forum" (2009). Moreover, the MP4 (ISO/IEC-14496-12, 14) can be used not only as a storage format but also as a transmission format for downloading and streaming, for example.

Regarding the streaming, the adaptive bitstreaming (ABS) technique is known, as described in Non-Patent Literature below. The ABS technique is a technique in which a plurality of encoded data having the same contents expressed at different bit rates are stored in a content server so that a client selects any encoded data among such a plurality of encoded data in accordance with a network band and reproduces the encoded data.

In the case of normal streaming, when a network band becomes below a bit rate, the data supply becomes incapable of catching up with the consumption, and the buffering data on the client side is depleted. As a result, the client cannot continue reproduction. By contrast, in the ABS technique, the reproduction data is switched to encoded data of a low bit rate when a band becomes small. Thus, it is possible to suppress breaks during reproduction.

### Citation List

### Non-Patent Literature

Non-Patent Literature 1: MPEG-DASH (Dynamic Adaptive Streaming over HTTP) (URL:http://mpeg.chiariglione.org/standards/mpeg-dash/media-presentation-description-and-segment-formats/text-isoiec-23009-12012-dam-1)

### Summary of Invention

### Technical Problem

However, even when the bit rate is the same, the quality level varies depending on content details. For example, it is expected that a moving part with large movement is inferior in quality to a moving part with small movement at the same bit rate. Thus, with only the notification of a bit rate of each encoded data to the client side, it was difficult for the client to select data while sufficiently considering the quality.

Therefore, the present disclosure proposes a new and improved content server and content distribution method that are capable of providing quality information of each segment constituting encoded data.

### Solution to Problem

According to the present disclosure, there is provided a content server including a storage unit configured to store a first segment index file that stores access information to access each of a plurality of sub-segments constituting each of encoded data obtained by encoding same contents at different bit rates and quality information of each of the plurality of sub-segments, and a communication unit configured to transmit the first segment index file to a client device and transmit a sub-segment of encoded data selected by the client device based on the first segment index file.

According to the present disclosure, there is provided a content distribution method including storing a first segment index file that stores access information to access each of a plurality of sub-segments constituting each of encoded data obtained by encoding same contents at different bit rates and quality information of each of the plurality of sub-segments, transmitting the first segment index file to a client device, and transmitting a sub-segment of encoded data selected by the client device based on the first segment index file.

### Advantageous Effects of Invention

As described above, according to the present disclosure, it is possible to provide quality information of each segment constituting encoded data.

### Brief Description of Drawings

[FIG. 1] FIG. 1 is an explanatory diagram illustrating a configuration of a content reproduction system according to an embodiment of the present disclosure.
[FIG. 2] FIG. 2 is an explanatory diagram illustrating a data flow in a content reproduction system according to the present embodiment.
[FIG. 3] FIG. 3 is an explanatory diagram illustrating a concrete example of an MPD.
[FIG. 4] FIG. 4 is a functional block diagram illustrating a configuration of a content server 10 according to the present embodiment.
[FIG. 5] FIG. 5 is a functional block diagram illustrating a configuration of a content reproduction device 20 according to the present embodiment.
[FIG. 6] FIG. 6 is an explanatory diagram illustrating a configuration example of a segment file.
[FIG. 7] FIG. 7 is an explanatory diagram illustrating a syntax example of a segment index file sid2.
[FIG. 8] FIG. 8 is an explanatory diagram illustrating a first modification related to the configuration of a segment file.
[FIG. 9] FIG. 9 is an explanatory diagram illustrating a second modification related to the configuration of a segment file.
[FIG. 10] FIG. 10 is an explanatory diagram illustrating a third modification related to the configuration of a segment file.

### Description of Embodiments

Hereinafter, preferred embodiments of the present disclosure will be described in detail with reference to the appended drawings. Note that, in this specification and the drawings, elements that have substantially the same function and structure are denoted with the same reference signs, and repeated explanation is omitted.

Moreover, in this specification and the drawings, a plurality of elements that have substantially the same function and structure may be distinguished by providing different alphabets after the same reference signs. For example, a plurality of elements that have substantially the same function and structure or logical significance are distinguished as content reproduction devices 20A, 20B, and 20C, if necessary. However, when it is unnecessary to distinguish each of a plurality of elements that have substantially the same function and structure, only the same reference sign is provided. For example, when it is unnecessary to particularly distinguish the content reproduction devices A, 20B, and 20C, the content reproduction devices are simply referred to as content reproduction devices 20.

Moreover, the present disclosure will be described following the item order described below.
1. Overview of content reproduction system
2. Configuration of content server
3. Configuration of content reproduction device
4. Configuration of segment file
5. Modifications
6. Conclusion

### <1. Overview of content reproduction system>

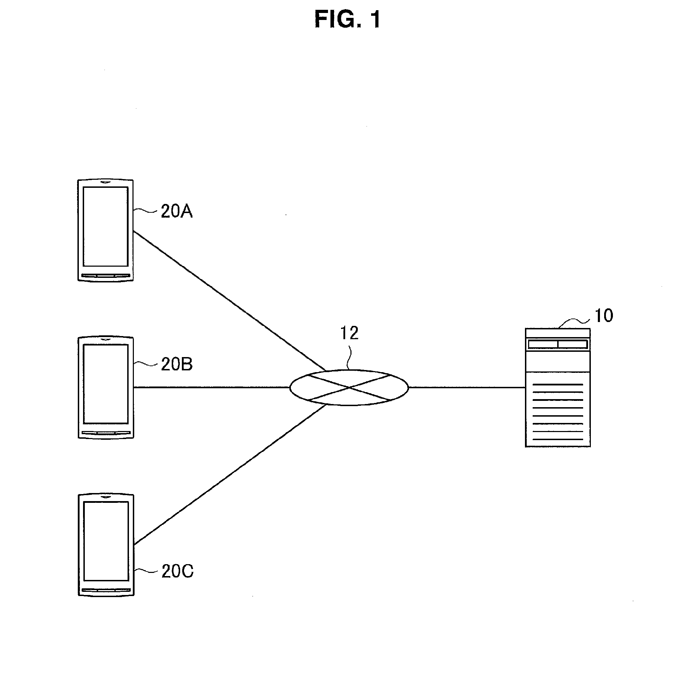

First, a content reproduction system according to an embodiment of the present disclosure will be schematically described with reference to FIG. 1 to FIG. 3.

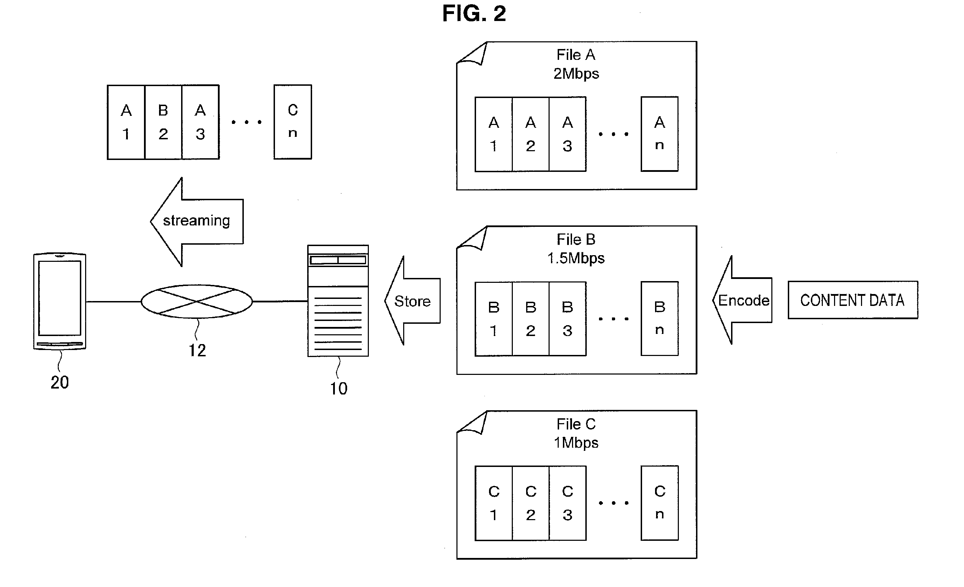

In the following, the basic configuration that is common in each embodiment will be first described with reference to FIG. 1 and FIG. 2.

FIG. 1 is an explanatory diagram illustrating a configuration of a content reproduction system according to an embodiment of the present disclosure. As illustrated in FIG. 1, the content reproduction system according to the embodiment of the present disclosure includes a content server 10, a network 12, and content reproduction devices 20 (client devices).

The content server 10 and the content reproduction device 20 are connected through the network 12. The network 12 is a wired or wireless transmission path of information transmitted from a device connected to the network 12.

For example, the network 12 may include public networks such as the Internet, a telephone network, and a satellite communication network, various kinds of local area networks (LAN) including Ethernet (registered trademark), and a wide area network (WAN), for example. Moreover, the network 12 may include a dedicated network such as the Internet protocol-virtual private network (IP-VPN).

The content server 10 encodes content data, and generates and stores a data file including encoded data and meta information of the encoded data. Note that, when the content server 10 generates an MP4-format data file, the encoded data corresponds to "mdat", and the meta information corresponds to "moov".

Moreover, the content data may be music data such as music, lectures, and radio programs, image data such as movies, television programs, video programs, pictures, documents, drawings, and diagrams, games, and software, for example.

Here, the content server 10 according to the present embodiment generates a plurality of data files of different bit rates regarding the same contents. In the following, this matter will be described concretely with reference to FIG. 2.

FIG. 2 is an explanatory diagram illustrating a data flow in the content reproduction system according to the present embodiment. The content server 10 encodes the same content data at different bit rates, and generates a file A of 2 Mbps, a file B of 1.5 Mbps, and a file C of 1Mbps, for example, as illustrated in FIG. 2. Relatively, the file A is of high bit rate, the file B is of standard bit rate, and the file C is of low bit rate.

Moreover, as illustrated in FIG. 2, the encoded data of each file is divided into a plurality of segments. For example, the encoded data of the file A is divided into segments "A1", "A2", "A3", ...... "An". The encoded data of the file B is divided into segments "B1", "B2", "B3", ...... "Bn". The encoded data of the file C is divided into segments "C1", "C2", "C3", ...... "Cn".

Note that each segment may be constituted by configuration samples of one or two or more pieces of video encoded data and sound encoded data that begin with an MP4 sync sample (IDR-picture in AVC/H.264 video encoding) and can be reproduced independently. For example, when video data of 30 frames per second is encoded in a group of picture (GOP) with a 15-frame fixed length, each segment may be two-second video and sound encoded data corresponding to 4GOP or 10-second video and sound encoded data corresponding to 20 GOP.

Moreover, a reproduction range (range of a time position from the head of contents) by a segment with the same arrangement order in each file is the same. For example, the reproduction ranges of the segment "A2", the segment "B2", and the segment "C2" are the same, and when each segment is two-second encoded data, the reproduction range of any of the segment "A2", the segment "B2", and the segment "C2" is two seconds to four seconds of contents.

The content server 10 generates the file A to the file C constituted by such a plurality of segments, and stores the file A to the file C. Then, the content server 10 sequentially transmits the segments constituting different files to the content reproduction device 20, as illustrated in FIG. 2, and the content reproduction device 20 streaming-reproduces the received segments.

Here, the content server 10 according to the present embodiment transmits a play list file (hereinafter, referred to as a media presentation description (MPD) including bit rate information and access information of each encoded data to the content reproduction device 20. Based on the MPD, the content reproduction device 20 selects any bit rate among a plurality of bit rates, and requests the content server 10 to transmit a segment corresponding to the selected bit rate.

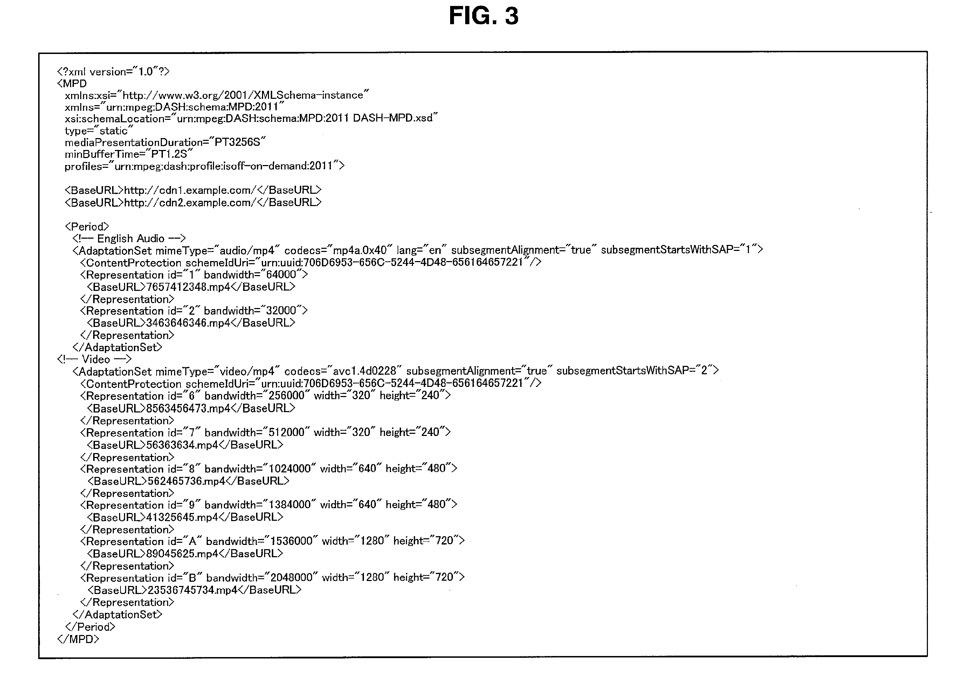

FIG. 3 is an explanatory diagram illustrating a concrete example of the MPD. As illustrated in FIG. 3, the MPD includes access information related to a plurality of encoded data having different bit rates (BANDWIDTH). For example, the MPD illustrated in FIG. 3 indicates the existence of encoded data of 256 Kbps, 1.024 Mbps, 1.384 Mbps, 1.536 Mbps, and 2.048 Mbps, and includes access information related to each encoded data. The content reproduction device 20 can dynamically change a bit rate of encoded data to be streaming-reproduced based on such an MPD.

Note that, although FIG. 1 illustrates a mobile terminal as an example of the content reproduction device 20, the content reproduction device 20 is not limited to such an example. For example, the content reproduction device 20 may be an information processing device such as a personal computer (PC). a home image processor (DVD recorder, video deck, etc.), personal digital assistants (PDA), a home game machine, and household electrical appliances. Moreover, the content reproduction device 20 may be an information processing device such as a cellular phone, a personal handyphone system (PHS), a portable music reproduction device, a portable image processor, and a portable game machine.

### <2. Configuration of content server>

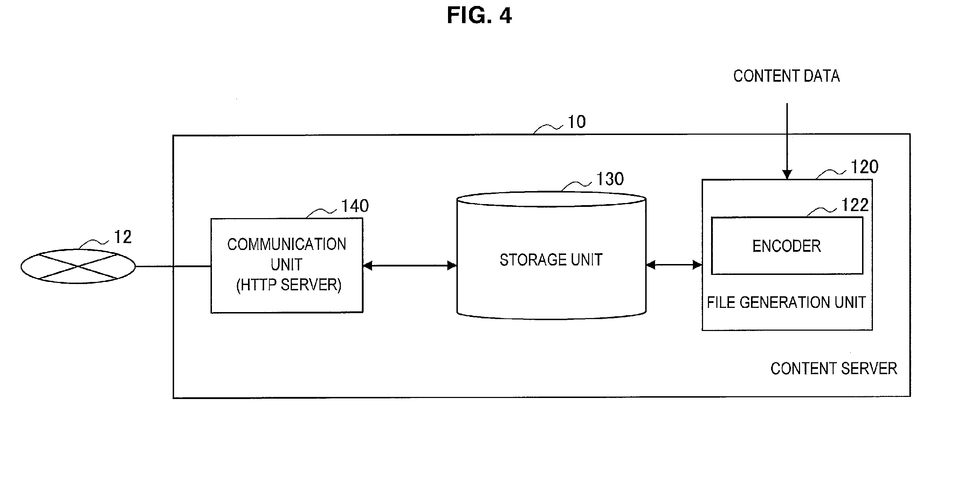

In the above, the overview of the content reproduction system according to the embodiment of the present disclosure has been described with reference to FIG. 1 to FIG. 3. Subsequently, the configuration of the content server 10 according to the present embodiment will be described with reference to FIG. 4.

FIG. 4 is a functional block diagram illustrating a configuration of the content server 10 according to the present embodiment. As illustrated in FIG. 4, the content server 10 according to the present embodiment includes a file generation unit 120, a storage unit 130, and a communication unit 140.

The file generation unit 120 includes an encoder 122 that encodes content data, and generates a plurality of encoded data having the same contents at difference bit rates and the above-described MPD. For example, when the file generation unit 120 has generated the encoded data of 256 Kbps, 1.024 Mbps, 1.384 Mbps, 1.536 Mbps, and 2.048Mbps are generated, the file generation unit 120 generates the MPD illustrated in FIG. 3.

The storage unit 130 stores a plurality of encoded data of different bit rates and the MPD that are generated by the file generation unit 120. The storage unit 130 may be a storage medium such as a nonvolatile memory, a magnetic disc, an optical disc, and a magneto optical (MO) disc. The nonvolatile memory is exemplified by an electrically erasable programmable read-only memory (EEPROM) and an erasable programmable read-only memory (EPROM), for example. Moreover, the magnetic disc is exemplified by a hard disc and a disc-shaped magnetic body disc, for example. Moreover, the optical disc is exemplified by a compact disc (CD), a digital versatile disc recordable (DVD-R), and a Blu-ray disc (BD) (registered trademark), for example.

The communication unit 140 is an interface with the content reproduction device 20, and performs communication with the content reproduction device 20 through the network 12. To be more specific, the communication unit 140 has a function as an HTTP server that performs communication with the content reproduction device 20 in accordance with an HTTP. For example, the communication unit 140 transmits an MPD to the content reproduction device 20, extracts, from the storage unit 130, encoded data requested based on the MPD by the content reproduction device 20, in accordance with an HTTP, and transmits the encoded data to the content reproduction device 20 as an HTTP response.

### <3. Configuration of content reproduction device>

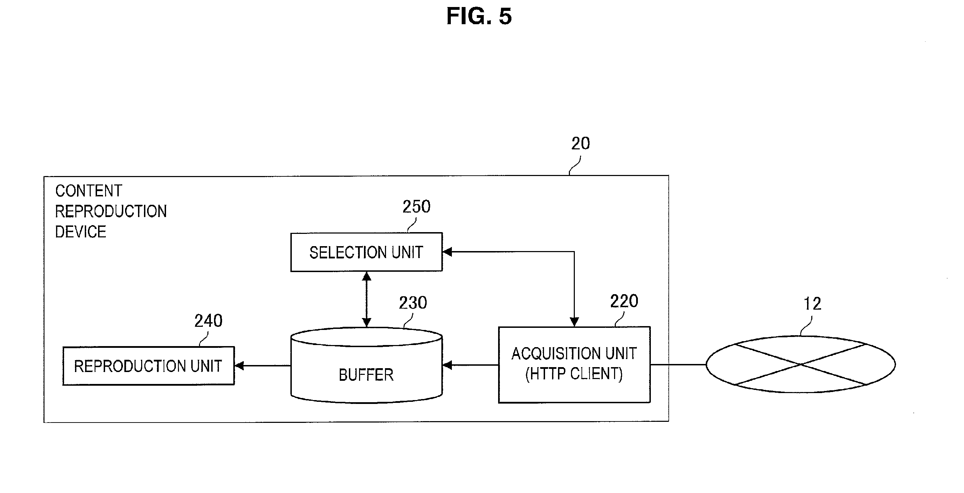

In the above, the configuration of the content server 10 according to the present embodiment has been described. Subsequently, the configuration of the content reproduction device 20 according to the present embodiment will be described with reference to FIG. 5.

FIG. 5 is a functional block diagram illustrating a configuration of the content reproduction device 20 according to the present embodiment. As illustrated in FIG. 5, the content reproduction device 20 according to the present embodiment includes an acquisition unit 220, a buffer 230, a reproduction unit 240, and a selection unit 250.

The acquisition unit 220 (communication unit) is an interface with the content server 10, and requests data from the content server 10 and acquires data from the content server 10. To be more specific, the acquisition unit 220 has a function as an HTTP client that performs communication with the content reproduction device 20 in accordance with an HTTP. For example, the acquisition unit 220 uses an HTTP range and thus can selectively acquire an MPD or a segment of encoded data from the content server 10.

The buffer 230 sequentially buffers segments acquired by the acquisition unit 220 from the content server 10. The segments of the encoded data buffered by the buffer 230 are sequentially supplied to the reproduction unit 240 in a first in first out (FIFO) manner.

The reproduction unit 240 sequentially reproduces the segments supplied from the buffer 230. Concretely, the reproduction unit 240 performs decoding, DA conversion, and rendering of the segments, for example.

The selection unit 250 sequentially selects, in the same contents, segments of encoded data corresponding to certain bit rates included in the MPD that are to be acquired. For example, when the selection unit 250 sequentially selects segments "A1", "B2", and "A3" in accordance with a band of the network 12, the acquisition unit 220 sequentially acquires the segments "A1", "B1", and "A3" from the content server 10, as illustrated in FIG. 2.

Here, the segment file of encoded data according to the present embodiment includes information that allows a bit rate of a segment (segment size: referenced_size, segment length: sub-segment_duration) to be specified, and a segment index file that stores quality information of a segment. Thus, the selection unit 250 can select encoded data based on not only a bit rate but also quality information. In the following, such a configuration of a segment file according to the present embodiment will be described concretely.

### <4. Configuration of segment file>

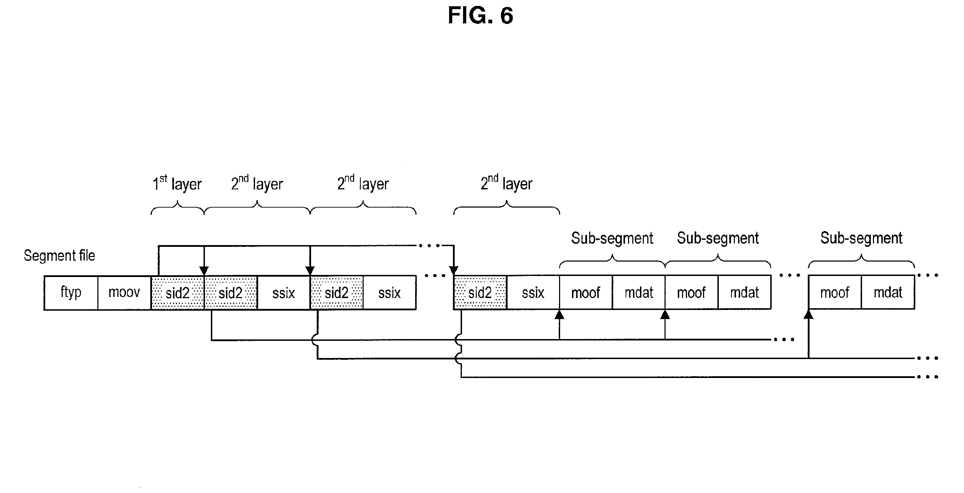

FIG. 6 is an explanatory diagram illustrating a configuration example of a segment file. As illustrated in FIG. 6, the segment file includes ftyp, moov, a first layer segment index file sid2 (upper segment index file), a second layer segment index files sid2 (first segment index files), and a plurality of sub-segments.

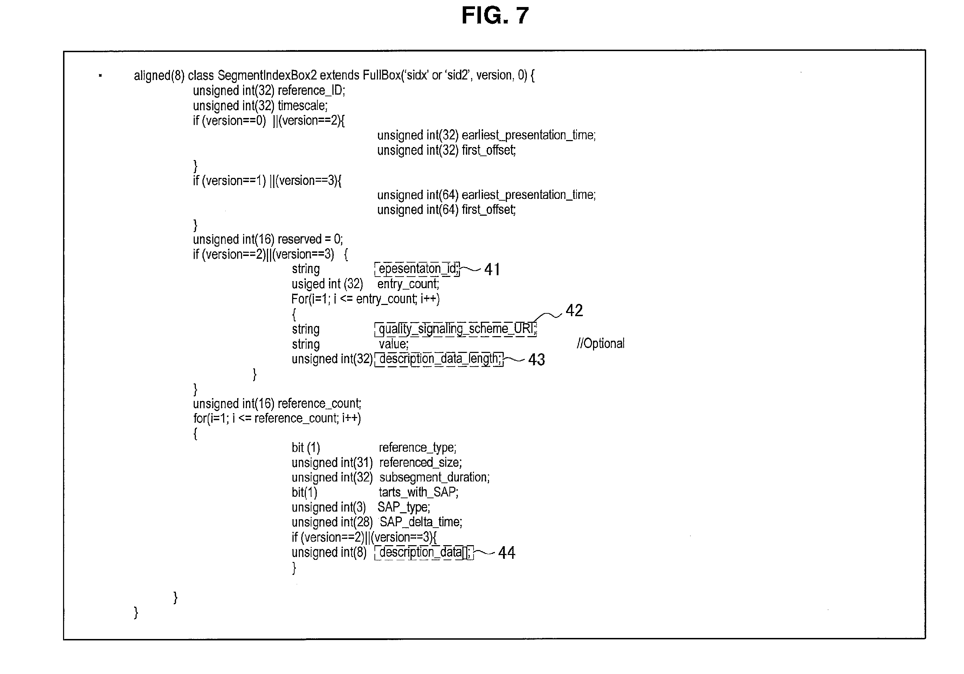

In the example illustrated in FIG. 6, each of a plurality of second layer segment index files sid2 corresponds to a plurality of sub-segments. Each of the second layer segment index files includes access information to the corresponding sub-segments and quality information of the corresponding sub-segments. Here, the configuration example of the second layer segment index file sid2 will be described with reference to FIG. 7.

FIG. 7 is an explanatory diagram illustrating a syntax example of the second layer segment index file sid2. As illustrated in FIG. 7, the segment index file sid2 includes "representation_id" 41, "quality_signaling_scheme_URI" 42, "description_data_length" 43, and "description_data" 44, for example.

The "representation_id" 41 is information indicating encoded data of a corresponding bit rate. The "quality_signaling_scheme_URI" 42 indicates a scheme based on which the quality information indicated by the "description_data" 44 is expressed. Note that the scheme for expressing quality information is exemplified by mean opinion score (MOS), peak signal-to-noise ratio (PSNR), and MSSSIM, for example.

The "description_data_length" 43 is a data length of the "description_data" 44. The "description_data" 44 is data in which the quality of a corresponding sub-segments is expressed based on the scheme indicated by the "quality_signaling_scheme_URI" 42.

Moreover, as illustrated in FIG. 6, the first layer segment index file sid2 corresponds to a plurality of second layer segment index files sid2, and includes access information to a plurality of second layer segment index files sid2. Note that the first layer segment index file sid2 may include quality information of a sub-segment group to which each of the second layer segment index files sid2 corresponds (quality information of five-minute sub-segments as a whole, for example).

### <5. Modifications>

Regarding the above-described configuration of the segment file, several modifications will be described below.

### (First modification)

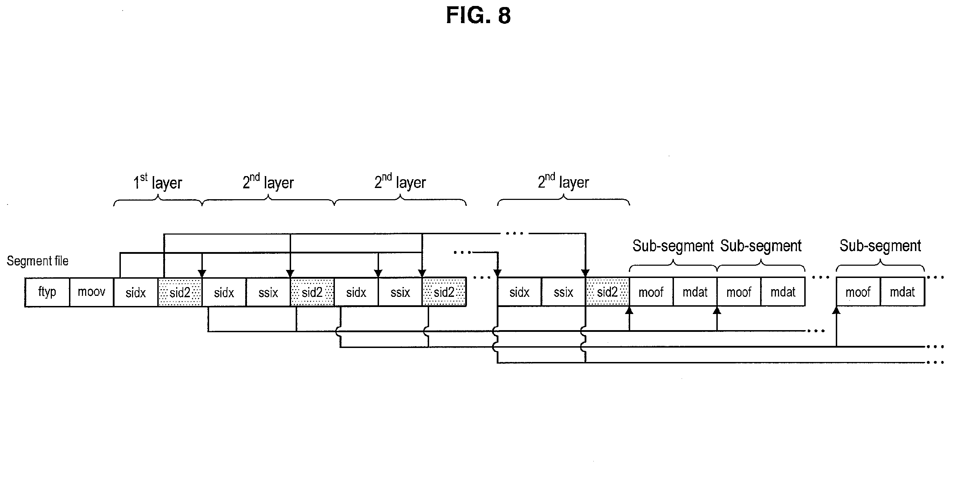

FIG. 8 is an explanatory diagram illustrating a first modification related to the configuration of a segment file. As illustrated in FIG. 8, the segment file according to the first modification includes a first layer segment index file sidx, and second layer segment index files sidx (second segment index files) in addition to the segment files described with reference to FIG. 6.

The first layer segment index file sidx corresponds to a plurality of second layer segment index files sidx, and includes access information to the plurality of second segment index files sidx.

The second layer segment index file sidx corresponds to a plurality of sub-segments, and includes access information to the corresponding sub-segments but do not include quality information of the corresponding sub-segments. That is, an existing segment index file can be used for the segment index file sidx.

In this manner, the existing segment index file sidx is used in addition to the extension segment index file sid2 including quality information of sub-segments, whereby the reliability of compatibility among versions is secured.

### (Second modification)

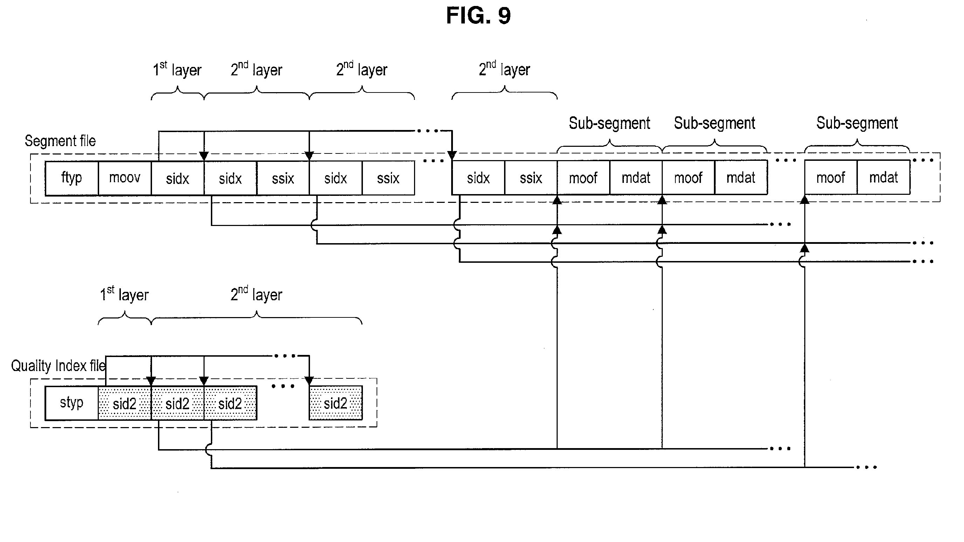

FIG. 9 is an explanatory diagram illustrating a second modification related to the configuration of a segment file. As illustrated in FIG. 9, the file generation unit 120 of the content server 10 may generate, as a quality index file, segment index files sid2 including quality information and access information of respective sub-segments, separately from sub-segment files.

### (Third modification)

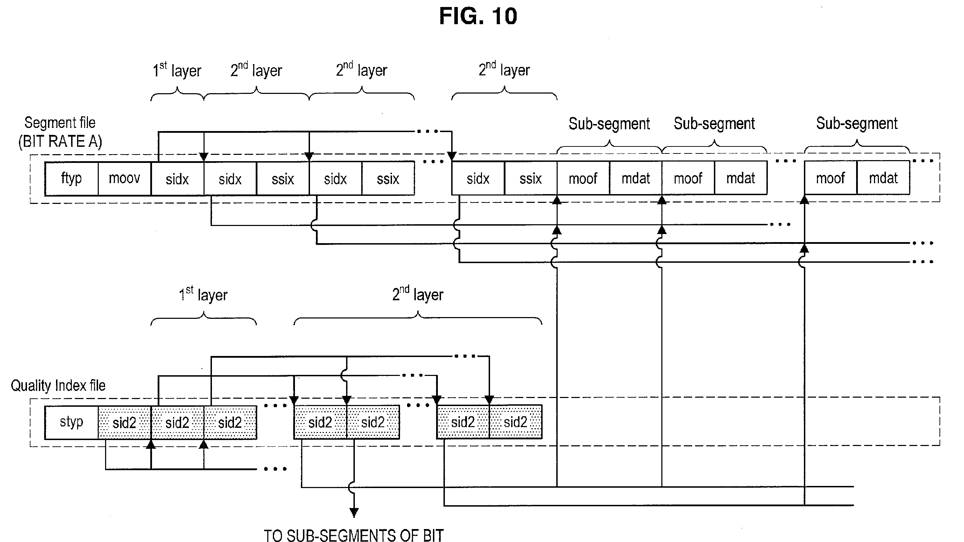

FIG. 10 is an explanatory diagram illustrating a third modification related to the configuration of a segment file. As illustrated in FIG. 10, the file generation unit 120 may generate segment index files sid2 related to a plurality of encoded data of different bit rates, as a quality index file, separately from sub-segment files of respective bit rates. According to such a configuration, it is possible to provide segment index files sid2 including the information for ABS to the content reproduction device 20. Therefore, the content reproduction device 20 can efficiently perform ABS based on the quality information of segments of respective bit rates.

Note that, in the example illustrated in FIG. 10, the 0th layer segment index file sid2 includes access information to a plurality of first layer segment index files sid2. Each of the plurality of first layer segment index files sid2 includes access information to second layer segment index files sid2 including access information to segments of any one of bit rates and quality information of the segments.

### <6. Conclusion>

As described above, according to the present embodiment, the quality information of each segment is provided to the content reproduction device 20, whereby the content reproduction device 20 can perform ABS based on the quality information. Furthermore, the quality information of each segment is stored in a segment index file, which facilitates access to the quality information.

The preferred embodiments of the present disclosure have been described above with reference to the accompanying drawings, whilst the present disclosure is not limited to the above examples, of course. A person skilled in the art may find various alterations and modifications within the scope of the appended claims, and it should be understood that they will naturally come under the technical scope of the present disclosure.

Moreover, it is also possible to generate a computer program for exerting the functions equivalent to the above-described elements of the content server 10 and the content reproduction device 20 on hardware such as a central processing unit (CPU), a ROM, and a random-access memory (RAM) provided in the content server 10 and the content reproduction device 20. Moreover, a storage medium that stores the computer program is also provided.

Additionally, the present technology may also be configured as below.
(1) A content server including:
   a storage unit configured to store a first segment index file that stores access information to access each of a plurality of sub-segments constituting each of encoded data obtained by encoding same contents at different bit rates and quality information of each of the plurality of sub-segments; and
   a communication unit configured to transmit the first segment index file to a client device and transmit a sub-segment of encoded data selected by the client device based on the first segment index file.
(2) The content server according to (1),
   wherein the storage unit further stores an upper segment index file as an upper layer file of the first segment index file, and
   wherein the upper segment index file stores access information to the plurality of first segment index files.
(3) The content server according to (1) or (2),
   wherein the storage unit further stores a second segment index file that includes access information to each of the plurality of sub-segments constituting each of encoded data but does not include the quality information, separately from the first segment index file.
(4) The content server according to any one of (1) to (3),
   wherein the storage unit stores the first segment index file, separately from a second segment index file that includes access information to each of the plurality of sub-segments constituting each of encoded data but does not include the quality information, and a segment file that stores actual data of each sub-segment.
(5) The content server according to (4),
   wherein the storage unit stores the first segment index file corresponding to each of a plurality of encoded data, as a same file.
(6) The content server according to any one of (1) to (5),
   wherein the first segment index file further includes information that allows a bit rate of each of the plurality of sub-segments to be specified.
(7) The content server according to any one of (1) to (6),
   wherein the quality information is expressed by mean opinion score (MOS), peak signal-to-noise ratio (PSNR), or MSSSIM.
(8) A content distribution method including:
   storing a first segment index file that stores access information to access each of a plurality of sub-segments constituting each of encoded data obtained by encoding same contents at different bit rates and quality information of each of the plurality of sub-segments;
   transmitting the first segment index file to a client device; and
   transmitting a sub-segment of encoded data selected by the client device based on the first segment index file.

### Reference Signs List

- 10: content server
- 12: network
- 20: content reproduction device
- 120: file generation unit
- 122: encoder
- 130: storage unit
- 140: communication unit
- 220: acquisition unit
- 230: buffer
- 240: reproduction unit
- 250: selection unit

## Claims

1. A content server comprising:
a storage unit configured to store a first segment index file that stores access information to access each of a plurality of sub-segments constituting each of encoded data obtained by encoding same contents at different bit rates and quality information of each of the plurality of sub-segments; and
a communication unit configured to transmit the first segment index file to a client device and transmit a sub-segment of encoded data selected by the client device based on the first segment index file.

2. The content server according to claim 1,
wherein the storage unit further stores an upper segment index file as an upper layer file of the first segment index file, and
wherein the upper segment index file stores access information to the plurality of first segment index files.

3. The content server according to claim 1,
wherein the storage unit further stores a second segment index file that includes access information to each of the plurality of sub-segments constituting each of encoded data but does not include the quality information, separately from the first segment index file.

4. The content server according to claim 1,
wherein the storage unit stores the first segment index file, separately from a second segment index file that includes access information to each of the plurality of sub-segments constituting each of encoded data but does not include the quality information, and a segment file that stores actual data of each sub-segment.

5. The content server according to claim 4,
wherein the storage unit stores the first segment index file corresponding to each of a plurality of encoded data, as a same file.

6. The content server according to claim 1,
wherein the first segment index file further includes information that allows a bit rate of each of the plurality of sub-segments to be specified.

7. The content server according to claim 1,
wherein the quality information is expressed by mean opinion score (MOS), peak signal-to-noise ratio (PSNR), or MSSSIM.

8. A content distribution method comprising:
storing a first segment index file that stores access information to access each of a plurality of sub-segments constituting each of encoded data obtained by encoding same contents at different bit rates and quality information of each of the plurality of sub-segments;
transmitting the first segment index file to a client device; and
transmitting a sub-segment of encoded data selected by the client device based on the first segment index file.
